# EUROPEAN PATENT APPLICATION

(11) **EP 4 482 168 A1**
(43) Date of publication of application: **25.12.2024**
(21) Application number: 24181289.0
(22) Date of filing: 11.06.2024
(51) Int. Cl.: H04N 25/773

(54) **IMAGING SYSTEM, MOVABLE APPARATUS, IMAGING METHOD, AND STORAGE MEDIUM**

(30) Priority: 23.06.2023 JP 2023103781
(71) Applicant: CANON KABUSHIKI KAISHA, Tokyo 146-8501 (JP)
(72) Inventor: FUJIMORI, Soya, Tokyo, 146-8501 (JP)
(74) Representative: TBK

(57) **Abstract**

An imaging system includes a plurality of pixels, each of which includes a sensor unit that emits pulses in accordance with photons and a counter that counts the number of the pulses, generates a signal on the basis of a difference between count values of the counter at the time of a start and an end of an accumulation period, and performs an accumulating operation in a first accumulation period and a second accumulation period within one full frame period, in which the first accumulation period is shorter than the second accumulation period, outputs the signal generated in the first accumulation period from an end of the first accumulation period to an end of the second accumulation period, performs recognition processing on the basis of the generated signal, and determines a reliability of a recognition result based on the signal in the first accumulation period and a reliability of a recognition result based on the signal in the second accumulation period on the basis of a driving condition information related to driving conditions of a movable apparatus.

## Description

### BACKGROUND OF THE INVENTION

### Field of the Invention

The present invention relates to an imaging system, a movable apparatus, an imaging method, a storage medium, and the like.

### Description of the Related Art

In recent years, imaging devices that digitally count numbers of photons that are incident on avalanche photodiodes (APD) and output the counted numbers as photoelectrically converted digital signals from pixels have been developed. Also, Japanese Patent No. 7223070 describes a configuration of an imaging device with an APD capable of outputting a plurality of videos, accumulation periods of which overlap each other, thereby allowing continuous shooting even at low illuminance, for example.

However, in a case in which an imaging element for an in-vehicle camera installed in a movable apparatus is assumed, for example, recognition processing is performed in units of frames in ordinary sensor driving, and it is thus possible to execute recognition processing only at every 33.3 ms in a case of 30 fps, for example. Therefore, the in-vehicle camera cannot apply recognition processing before a frame ends even if an object jumps into the frame immediately after frame switching.

Also, an accumulation period is often set to be equal to or greater than a specific period (11 ms) in the in-vehicle camera in order to inhibit flickering due to traffic lights, and bright images are captured by setting a long accumulation period especially at low illuminance. However, photographic subject blur may occur for an object moving at a high speed and a recognition rate may decrease due to the long accumulation period.

Also, it is also not possible to obtain accurate recognition results if recognition processing is performed using images accumulated over long periods of time at the time of traveling along a bumpy road that causes vertical shaking, at the time of traveling at a steering angle that exceeds a specific level, and in a case in which rain/snow is strongly falling and appears as lines in an image.

### SUMMARY OF THE INVENTION

According to an aspect of the present invention, an imaging system includes: a plurality of pixels, each of which includes a sensor unit that emits pulses in accordance with photons, and a counter that counts the number of the pulses; and at least one processor or circuit configured to function as a control unit configured to generate a signal on the basis of a difference between count values of the counter at the time of a start and an end of an accumulation period, perform an accumulating operation in a first accumulation period and a second accumulation period within one full frame period, in which the first accumulation period is shorter than the second accumulation period, and output the signal generated in the first accumulation period between an end of the first accumulation period and an end of the second accumulation period, and a recognition unit configured to perform recognition processing on the basis of the generated signal and determine a reliability of a recognition result based on the signal in the first accumulation period and a reliability of a recognition result based on the signal in the second accumulation period on the basis of driving condition information related to driving conditions of a movable apparatus.

Further features of the present invention will become apparent from the following description of embodiments with reference to the attached drawings.

### BRIEF DESCRIPTION OF THE DRAWINGS

Fig. 1 is a diagram illustrating a configuration example of a photoelectric conversion element according to a first embodiment of the present invention.
Fig. 2 is a diagram illustrating a configuration example of a sensor substrate 11.
Fig. 3 is a diagram illustrating a configuration example of a circuit substrate 21.
Fig. 4 is a diagram illustrating a pixel 101 and an equivalent circuit of a signal processing circuit 103 corresponding to the pixel 101 in Figs. 2 and 3.
Fig. 5 is a diagram schematically illustrating a relationship between an operation of an APD 201 and an output signal.
Fig. 6 is a functional block diagram of an imaging device 600 and a movable apparatus 700 according to a first embodiment.
Fig. 7 is a diagram for explaining an imaging method performed by a camera control unit 605 according to the first embodiment.
Fig. 8 is a diagram illustrating an example of images of a plurality of split frames.
Fig. 9 is a diagram illustrating a relationship between memory circuits and buffers according to the embodiment.
Fig. 10 is a flowchart illustrating details of a drive example of the photoelectric conversion element according to the embodiment.
Fig. 11 is a flowchart continuing from Fig. 10.
Fig. 12 is a flowchart illustrating an example of an imaging method of detecting conditions during operation and changing a reliability according to the first embodiment.
Fig. 13 is a functional block diagram of an imaging device 800 and a movable apparatus 700 according to a second embodiment.
Fig. 14 is a flowchart illustrating an example of an imaging method of detecting the amount of incident light and conditions during operation and changing a reliability according to the second embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First embodiment>

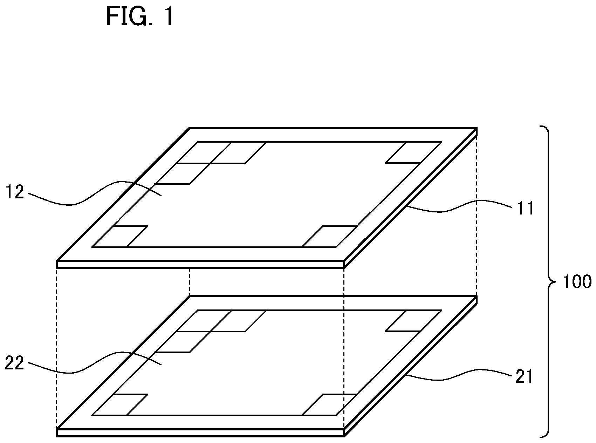

Fig. 1 is a diagram illustrating a configuration example of a photoelectric conversion element according to an embodiment of the present invention. Hereinafter, an imaging device in which a photoelectric conversion element 100 has a so-called stacked structure in which the photoelectric conversion element 100 is configured by two substrates, namely a sensor substrate 11 and a circuit substrate 21 being stacked and electrically connected to each other will be described as an example.

However, the photoelectric conversion element 100 may have a so-called non-stacked structure in which configurations included in the sensor substrate and configurations included in the circuit substrate are disposed on a common semiconductor layer. The sensor substrate 11 includes a pixel region 12. The circuit substrate 21 includes a circuit region 22 in which a signal detected in the pixel region 12 is processed.

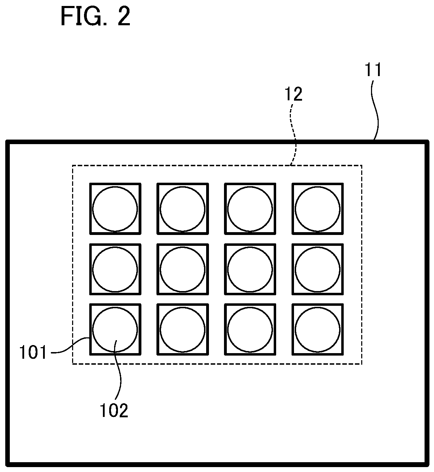

Fig. 2 is a diagram illustrating a configuration example of the sensor substrate 11. The pixel region 12 on the sensor substrate 11 includes a plurality of pixels 101 two-dimensionally disposed in a plurality of rows and columns. Each pixel 101 includes a photoelectric conversion unit 102 including an avalanche photodiode (hereinafter, APD).

Here, the photoelectric conversion unit 102 functions as a sensor unit that emits pulses in accordance with photons. Note that the numbers of rows and columns of the pixel array forming the pixel region 12 are not particularly limited.

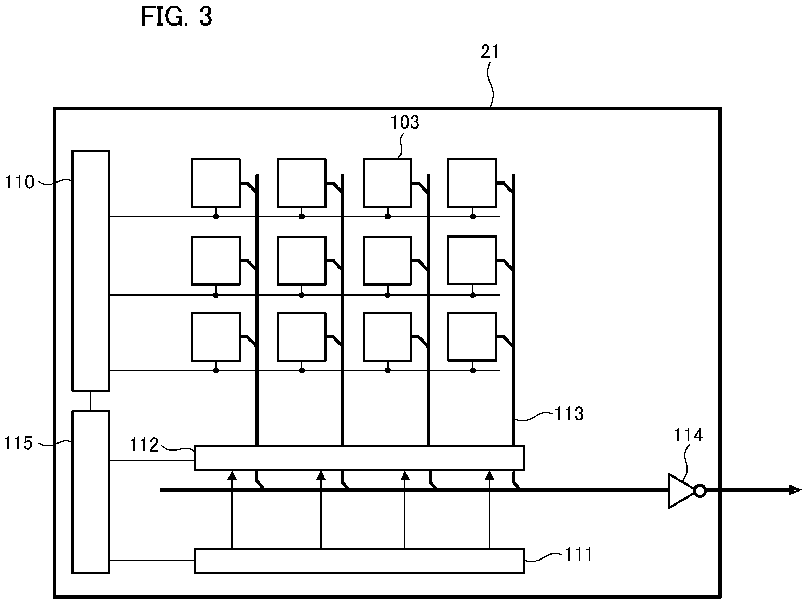

Fig. 3 is a diagram illustrating a configuration example of the circuit substrate 21. The circuit substrate 21 includes a signal processing circuit 103 that processes an electric charge photoelectrically converted by each photoelectric conversion unit 102 in Fig. 2, a reading circuit 112, a control pulse generation unit 115, a horizontal scanning circuit 111, a vertical signal line 113, a vertical scanning circuit 110, and an output circuit 114.

The vertical scanning circuit 110 receives control pulses supplied from the control pulse generation unit 115 and sequentially supplies the control pulses to the plurality of pixels aligned in the row direction. A logic circuit such as a shift register or an address decoder is used for the vertical scanning circuit 110.

A signal output from the photoelectric conversion unit 102 of each pixel is processed by each signal processing circuit 103. The signal processing circuit 103 is provided with a counter, a memory, and the like, and the memory holds a digital value. The horizontal scanning circuit 111 inputs a control pulse that sequentially selects each column to the signal processing circuit 103 in order to read a digital signal from the memory of each pixel holding the signal.

A signal is output from the signal processing circuit 103 of the pixel of the row selected by the vertical scanning circuit 110 to the vertical signal line 113. The signal output to the vertical signal line 113 is output to the outside of the photoelectric conversion element 100 via the reading circuit 112 and the output circuit 114. A plurality of buffers connected to the vertical signal line 113 are incorporated in the reading circuit 112.

As illustrated in Figs. 2 and 3, the plurality of signal processing circuits 103 are disposed in a region overlapping the pixel region 12 in a plan view. Also, the vertical scanning circuit 110, the horizontal scanning circuit 111, the reading circuit 112, the output circuit 114, and the control pulse generation unit 115 are disposed to overlap a part between an end of the sensor substrate 11 and an end of the pixel region 12 in a plan view.

In other words, the sensor substrate 11 includes the pixel region 12 and a non-pixel region disposed around the pixel region 12. Also, the vertical scanning circuit 110, the horizontal scanning circuit 111, the reading circuit 112, the output circuit 114, and the control pulse generation unit 115 are disposed in a region overlapping the non-pixel region in a plan view.

Note that disposition of the vertical signal line 113 and disposition of the reading circuit 112 and the output circuit 114 are not limited to those in the example illustrated in Fig. 3. For example, the vertical signal line 113 may be disposed to extend in the row direction, and the reading circuit 112 may be disposed after the extension of the vertical signal line 113. Also, the signal processing circuit 103 is not necessarily provided for each of all the photoelectric conversion units, and a configuration in which one signal processing circuit is shared by a plurality of photoelectric conversion units and signal processing is sequentially performed may be employed.

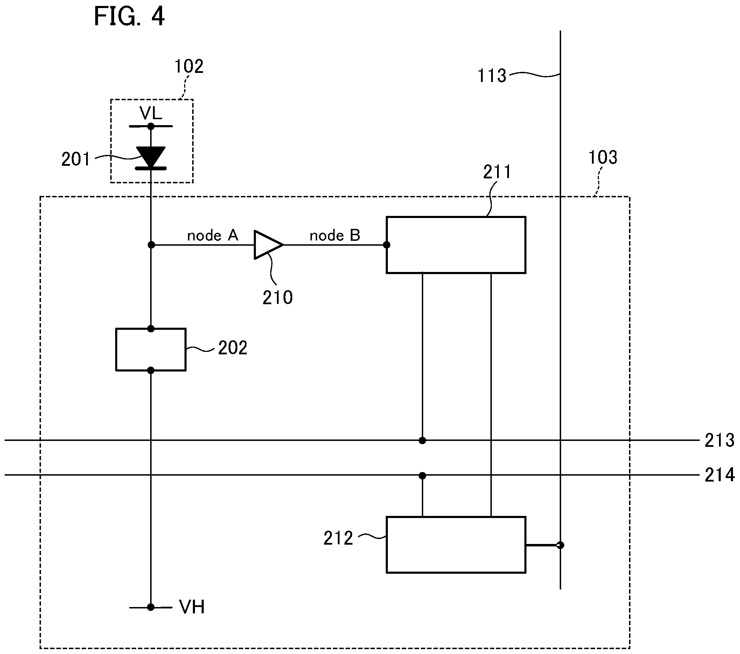

Fig. 4 is a diagram illustrating the pixel 101 in Figs. 2 and 3 and an equivalent circuit of the signal processing circuit 103 corresponding to the pixel 101. As illustrated in Fig. 4, each pixel 101 includes the photoelectric conversion unit 102 as a sensor unit, a counter circuit 211, a memory circuit 212, and the like.

The APD 201 included in the photoelectric conversion unit 102 generates an electric charge pair in accordance with incident light through photoelectric conversion. One node out of two nodes of the APD 201 is connected to a power source line to which a drive voltage VL (first voltage) is supplied. Also, the other node out of the two nodes of the APD 201 is connected to a power source line to which a drive voltage VH (second voltage) that is higher than the drive voltage VL is supplied.

In Fig. 4, the one node of the APD 201 is an anode, and the other node of the APD is a cathode. Reverse bias voltages to cause the APD 201 to perform an avalanche multiplication operation are applied to the anode and the cathode of the APD 201. An electric charge caused by incident light causes avalanche multiplication and an avalanche current is generated by achieving a state in which such voltages have been supplied.

Note that there are a Geiger mode in which an operation is caused by a voltage difference between the anode and the cathode that is greater than a breakdown voltage and a linear mode in which an operation is caused by a voltage difference between the anode and the cathode that is in the vicinity of or is equal to or less than the breakdown voltage in the case in which the reverse bias voltages are supplied. The APD that is caused to operate in the Geiger mode will be referred to as a SPAD. In a case of the SPAD, the drive voltage VL (first voltage) is -30 V, while the drive voltage VH (second voltage) is 1 V, for example.

The signal processing circuit 103 includes a quench element 202, a waveform shaping unit 210, the counter circuit 211, and the memory circuit 212. The quench element 202 is connected to the power source line to which the drive voltage VH is supplied and one node out of the anode and the cathode of the APD 201.

The quench element 202 functions as a load circuit (quench circuit) at the time of signal multiplication based on avalanche multiplication, curbs a voltage to be supplied to the APD 201, and serves to curb the avalanche multiplication (quench operation). Also, the quench element 202 serves to return the voltage to be supplied to the APD 201 to the drive voltage VH by causing a current corresponding to a voltage dropping through the quench operation to flow (recharge operation).

Fig. 4 illustrates an example in which the signal processing circuit 103 includes, in addition to the quench element 202, the waveform shaping unit 210, the counter circuit 211, and the memory circuit 212.

The waveform shaping unit 210 shapes a change in voltage at the cathode of the APD 201 obtained at the time of photon detection and outputs a pulse signal. As the waveform shaping unit 210, an inverter circuit is used, for example. Although Fig. 4 illustrates an example in which one inverter is used as the waveform shaping unit 210, a circuit in which a plurality of inverters are connected in series may be used, or another circuit having a waveform shaping effect may be used.

The counter circuit 211 counts the number of pulses output from the waveform shaping unit 210 and holds the count value. Also, when a control pulse RES is supplied via the drive line 213, the signal held by the counter circuit 211 is reset. Here, the counter circuit 211 generates a signal on the basis of a difference between count values at the time of a start and an end of an accumulation period.

A control pulse SEL is supplied from the vertical scanning circuit 110 in Fig. 3 to the memory circuit 212 via a drive line 214 in Fig. 4 (not illustrated in Fig. 3), and electrical connection and non-connection between the counter circuit 211 and the vertical signal line 113 are switched. The memory circuit 212 functions as a memory that temporarily stores the count value of the counter and outputs an output signal from the counter circuit 211 of the pixel to the vertical signal line 113.

Note that switches such as transistors may be disposed between the quench element 202 and the APD 201 and between the photoelectric conversion unit 102 and the signal processing circuit 103 to switch electrical connection. Similarly, supply of the drive voltage VH or the drive voltage VL supplied to the photoelectric conversion unit 102 may be electrically switched using a switch such as a transistor.

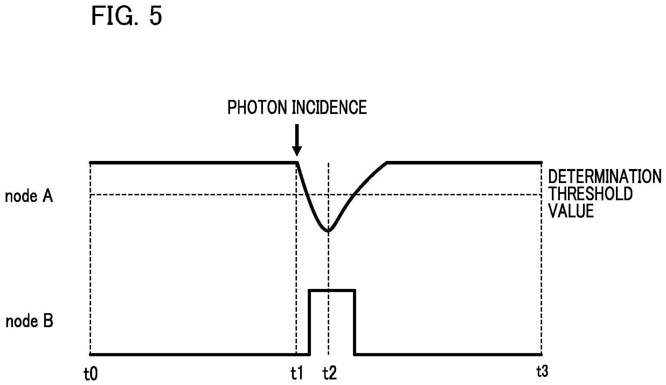

Fig. 5 is a diagram schematically illustrating a relationship between an operation of the APD 201 and an output signal. An input side of the waveform shaping unit 210 is defined as nodeA, and an output side is defined as nodeB. A potential difference of VH-VL is applied to the APD 201 from a clock time t0 to a clock time 11. Once photons are incident on the APD 201 at the clock time t1, avalanche multiplication occurs in the APD 201, an avalanche multiplication current flows to the quench element 202, and the voltage at nodeA drops.

Once the amount of voltage dropping further increases and the potential difference applied to the APD 201 decreases, the avalanche multiplication in the APD 201 stops as can be seen at a clock time t2, and the voltage level of nodeA does not drop below a certain specific value.

Thereafter, a current compensating for the amount corresponding to the voltage drop from the drive voltage VL flows through nodeA from the clock time t2 to a clock time t3, and nodeA settles down at the original potential level at the clock time t3. At this time, a part of the output waveform exceeding a certain threshold value at nodeA is subjected to waveform shaping performed by the waveform shaping unit 210 and is then output as a pulse signal by nodeB.

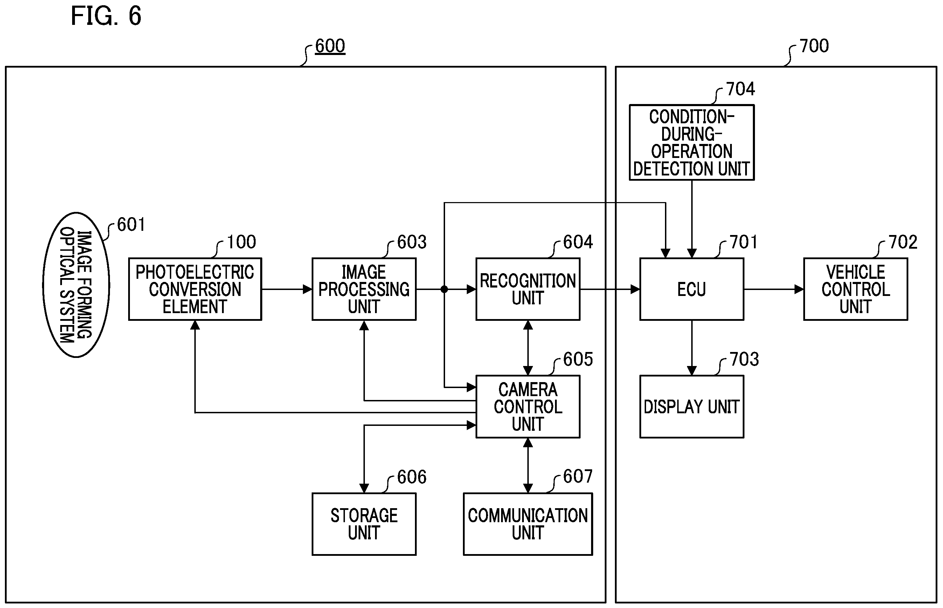

Fig. 6 is a functional block diagram of an imaging device 600 and a movable apparatus 700 according to a first embodiment. In the present embodiment, some of functional blocks of the imaging device 600 and the movable apparatus 700 configure an imaging system.

Note that some of the functional blocks illustrated in Fig. 6 are realized by causing computers which are included in the imaging device 600 and the movable apparatus 700 and are not illustrated to execute computer programs stored in memories as storage media, which are not illustrated.

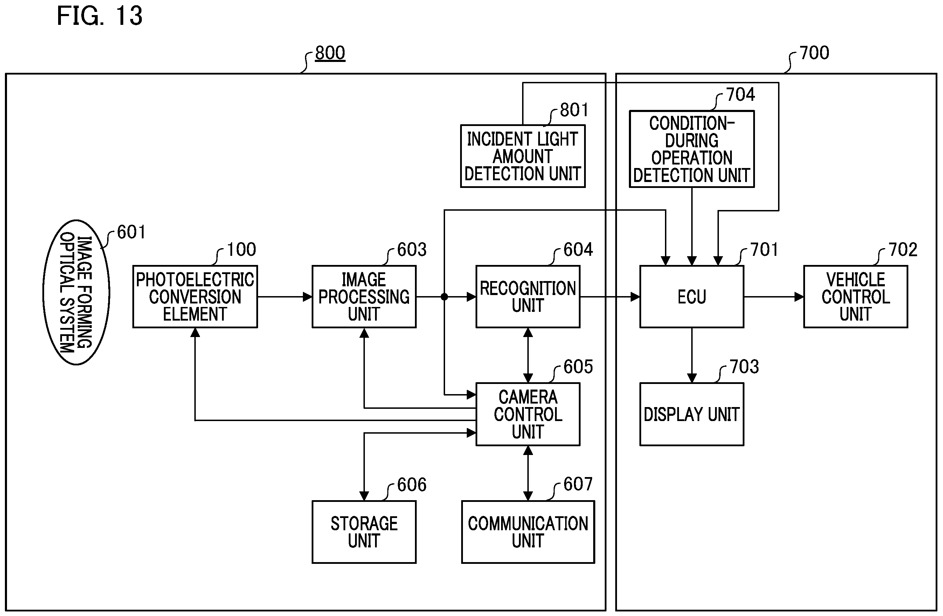

However, parts or entireties of them may be realized by hardware. As the hardware, it is possible to use application specific integrated circuits (ASICs), processors (reconfigurable processors or DPSs), or the like. Also, the functional blocks illustrated in Fig. 6 may not be incorporated in the same casing and may be configured by separate devices connected to each other via a signal path. Note that the above description related to Fig. 6 also applies to Fig. 13, which will be described later.

The imaging device 600 includes a photoelectric conversion element 100, an image forming optical system 601, an image processing unit 603, a recognition unit 604, a camera control unit 605, a storage unit 606, a communication unit 607, and the like. The photoelectric conversion element 100 includes the avalanche photodiode described in Figs. 1 to 5 for photoelectrically converting an optical image.

The imaging device according to the embodiment is mounted in the movable apparatus 700, and a camera unit configured of a set of the image forming optical system 601 and the photoelectric conversion element 100 is configured to image at least one direction out of a front side, a rear side, and lateral sides of the movable apparatus, for example. Note that a plurality of camera units may be provided in the movable apparatus 700.

The image processing unit 603 performs image processing on a signal output from the pixel. Also, the image processing unit 603 performs predetermined image processing on an image signal on the basis of region information output from the camera control unit 605 and generates a final image signal. The predetermined image processing includes, for example, outline emphasis, black level correction, gamma curve adjustment, noise reduction, digital gain adjustment, demosaicing, and data compression.

Note that in a case in which the photoelectric conversion element 100 includes on-chip color filters of RGB or the like, it is desirable that the image processing unit 603 perform processing such as white balance correction and color conversion. Note that an output of the image processing unit 603 is supplied to the recognition unit 604, an electric control unit (ECU) 701 of the movable apparatus 700, and the camera control unit 605.

The recognition unit 604 performs image recognition on the basis of a result of the image processing. In other words, persons, vehicles, and the like in the surroundings are recognized by performing image recognition on the basis of the image signal on which the image processing has been performed by the image processing unit 603, and an alert or the like is issued as needed.

Note that an example in which the movable apparatus 700 is an automobile, for example, will be described in the present embodiment, the movable apparatus may be any movable apparatus such as an aircraft, a train, a ship, a drone, an AGV, or a robot as long as it can move.

The camera control unit 605 incorporates a CPU as a computer and a memory storing a computer program and controls each portion of the imaging device 600 by the CPU executing the computer program stored in the memory.

Note that the camera control unit 605 functions as a control section and controls a length of an exposure period of each frame of the photoelectric conversion element 100, a control signal CLK timing, and the like via the control pulse generation unit of the photoelectric conversion element 100, for example. Also, control of the recognition processing performed by the recognition unit 604 may be able to be performed on the basis of an output from the ECU 701.

The storage unit 606 includes a recording medium such as a memory card or a hard disk, for example and can store and read an image signal. The communication unit 607 includes a wireless or wired interface, outputs the generated image signal to the outside of the imaging device 600, and receives various signals from the outside.

The ECU 701 incorporates a CPU as a computer and a memory storing a computer program and controls each portion in the movable apparatus 700 by the CPU executing the computer program stored in the memory.

An output of the ECU 701 is supplied to a vehicle control unit 702 and a display unit 703. The vehicle control unit 702 functions as a movement control section that performs driving, stopping, direction control, and the like of a vehicle as the movable apparatus on the basis of the output of the ECU 701.

Note that the vehicle control unit 702 as the movement control section controls operations of the movable apparatus on the basis of at least one of recognition processing based on a signal generated in a first accumulation period and recognition processing based on a signal generated in a second accumulation period. Note that the first accumulation period and the second accumulation period will be described later.

Also, the display unit 703 includes a display element such as a liquid crystal device or an organic EL, for example, and is mounted in the movable apparatus 700. The display unit 703 displays various kinds of information related to an image acquired by the photoelectric conversion element 100, a vehicle traveling state, and the like for a driver of the movable apparatus 700 using a GUI, for example, on the basis of the output of the ECU 701.

A condition-during-operation detection unit 704 detects conditions of the movable apparatus 700 during operation and outputs a signal to the ECU 701. The conditions during operation include at least one of a traveling speed of the movable apparatus 700, a steering angle of the movable apparatus 700, a weather (whether or not it rains or snows) during operation of the movable apparatus 700, and the amount of shaking of the movable apparatus 700 itself, for example.

These conditions during operation are output from the condition-during-operation detection unit 704 to the ECU 701. The traveling speed will be described as an example. The ECU 701 that has acquired the traveling speed of the movable apparatus 700 increases a reliability x of a recognition result for the output image in the first accumulation period when the traveling speed is determined to be equal to or greater than a certain threshold value v (80 km per hour, for example). Alternatively, the ECU 701 decreases a reliability y of a recognition result for the output image in the second accumulation period. Alternatively, the ECU 701 performs both of them.

This is because when the traveling speed of the movable apparatus is equal to or greater than the threshold value v, a main image accumulated for a long period of time includes large photographic subject blur and leads to a degraded reliability of a recognition result, while a recognition reliability of a recognition result for an image accumulated for a short period of time increases. Note that in a case in which the movable apparatus travels below the threshold value v, the amount of photographic subject blur is relatively small even in the main image accumulated for a long period of time, and a more accurate recognition result for the image than an image that has been accumulated for a short period of time and has low contrast and insufficient brightness can be obtained.

Note that a configuration in which an output of the condition-during-operation detection unit 704 is supplied to the camera control unit 605 via the ECU 710, for example, may be employed, and the above determination regarding whether or not the traveling speed is equal to or greater than the threshold value v may be performed by the camera control unit 605.

Note that the image processing unit 603, the recognition unit 604, and the like in Fig. 6 may not be mounted in the movable apparatus 700 and may be provided in an external terminal or the like that is provided separately from the movable apparatus 700 and is for remotely controlling the movable apparatus 700 or for monitoring traveling of the movable apparatus, for example. The imaging system in the present embodiment includes such an imaging system configured of a plurality of devices connected by a communication path.

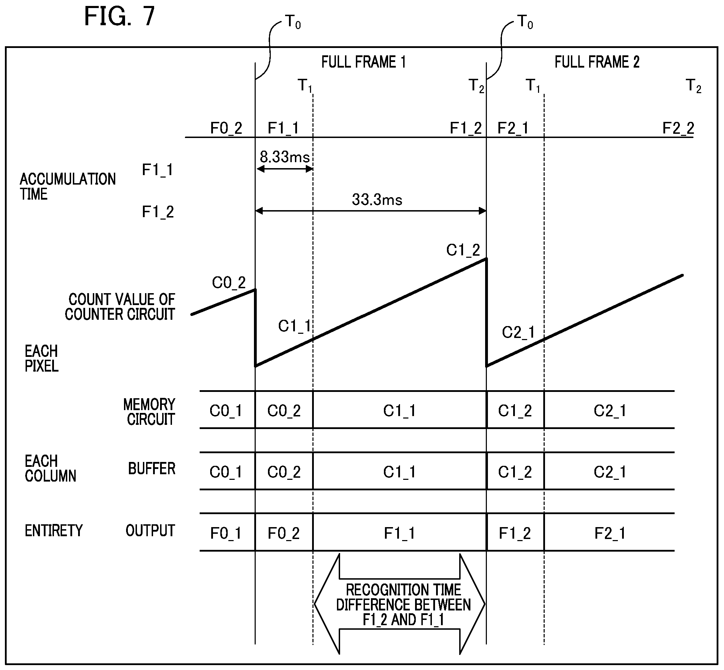

Fig. 7 is a diagram for explaining an imaging method performed by the camera control unit 605 according to the first embodiment. In the present embodiment, photoelectric conversion is cyclically performed at 30 full-frames/second, for example. Note that in the present embodiment, one frame with the length of 33.3 ms, for example, will be referred to as a full frame (or a main frame) and frames obtained by splitting the full frame period will be referred to as frames (or sub-frames).

In other words, a full frame 1 with the length of 33.3 ms from a clock time T0 to a clock time T12 is split into two parts as illustrated in Fig. 7, and the full frame 1 is split into a frame 1_1 and a frame 1_2 as illustrated in Fig. 7.

Although the frame 1_1 is located at the position of 8.33 ms in the present embodiment, the frame 1_1 may be located at another position. Note that frames 0_1, 0_2, 1_1, 1_2, 2_1, and 2_2 will be indicated as F0_1, 0_2, 1_1, 1_2, 2_1, and 2_2 in the drawings in and after Fig. 7 for convenience.

Note that the frame 1_1 has an accumulation period (8.33 ms, for example) from the start clock time T0 of the full frame 1 to the clock time T 1, and the frame 1_2 has an accumulation period (33.3 ms, for example) from the clock time T0 to the clock time T2. Note that in the present embodiment, the short accumulation period from the clock time T0 to the clock time T1 will be referred to as the first accumulation period, and the long accumulation period from the clock time T0 to the clock time T4 will be referred to as the second accumulation period, for example.

Then, the counter circuit 211 is reset at the clock time T0, and count values C1_1 and C1_2 are acquired from the counter circuit 211 at the clock times T1 and T2, respectively.

Also, the count values C1_1 and C1_2 are temporarily saved in the memory circuit 212. Then, signals corresponding to one row temporarily saved in the memory circuit 212 are successively output from the photoelectric conversion element via the buffer of the reading circuit 112.

In this manner, according to the present embodiment, the signals accumulated in the period of the frame 1_1 are read from the clock time T1 to the clock time T2 and are quickly processed by the recognition unit 604. Therefore, it is possible to quickly perform the image recognition. Similarly, signals accumulated in the period of the frame 1_2 are read from the clock time T2 to the clock time T1, and image recognition can be repeatedly performed.

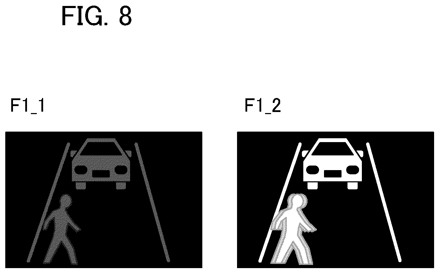

Fig. 8 is a diagram illustrating an example of images of a plurality of split frames. Although the image in the frame 1_1 is dark due to the short accumulation time as illustrated in Fig. 8, the amount of photographic subject blur of a person who has jumped out is small. On the other hand, the accumulation time of the frame 1_2 is long, and photographic subject blur is thus likely to occur. Note that blur is unlikely to occur in a stopping vehicle or a white line, and contrast is more likely to be improved as the accumulation time increases.

In this manner, the accumulating operation in the first accumulation period and the second accumulation period is performed within one full frame period in a control step performed by the camera control unit 605 in the present embodiment. Also, the first accumulation period is shorter than the second accumulation period, and control is performed such that the signal generated in the first accumulation period is output from an end of the first accumulation period to an end of the second accumulation period.

Also, the first accumulation period and the second accumulation period overlap each other, and the first accumulation period and the second accumulation period start at the same time in the present embodiment. Furthermore, the timing when the second accumulation period ends corresponds to a gap of frames, and the second accumulation period is an integer multiple of the first accumulation period. In other words, the timing when the second accumulation period ends coincides with the timing when the full frame period ends.

However, it is not necessary for the second accumulation period to be an integer multiple of the first accumulation period. It is only necessary for the second accumulation period to be longer than the first accumulation period (the first accumulation period is shorter than the second accumulation period), and for the end of the second accumulation period to happen after the end of the first accumulation period.

In other words, an image with a short accumulation period and an image with a long accumulation period are created, the timing at which the short accumulation period ends is set to be earlier than the timing at which the long accumulation period ends, and the image with the short accumulation period is output as soon as the short accumulation time ends, and is sent to the recognition unit in the later stage.

Then, a photographic subject is recognized on the basis of the signals generated in the first accumulation period and the second accumulation period. The recognition unit 604 as the recognition section recognizes the photographic subject on the basis of the signals generated in the first accumulation period and the second accumulation period.

Therefore, although it is not possible to perform image recognition before one full frame period elapses in the related art, it is possible to perform image recognition 8.33 ms later in the shortest case in the present embodiment. In other words, it is possible to quickly recognize an obstacle and the like when the movable apparatus is moving at a high speed, for example. Therefore, it is possible to quickly step on the brake. Alternatively, it is possible to avoid an obstacle in an early stage.

Note that since it is possible to improve contrast in the image with the long accumulation time, it is possible to use it not only as an image for recognition but also as an image for display. In other words, the image with the short accumulation time is suitable for quick photographic subject recognition for sudden jumping-out, while the image with the long accumulation time is also suitable for an image for display. In this manner, the display unit 703 in the present embodiment displays at least the signal generated in the second accumulation period as an image.

Also, since the APD is used in the present embodiment, the accumulated electric charge is not degraded through reading unlike a CMOS sensor, and it is possible to cause the accumulation period to overlap each other. Also, since there is no reading noise, an original signal is not degraded regardless of how many times the signal is read in one-time accumulation.

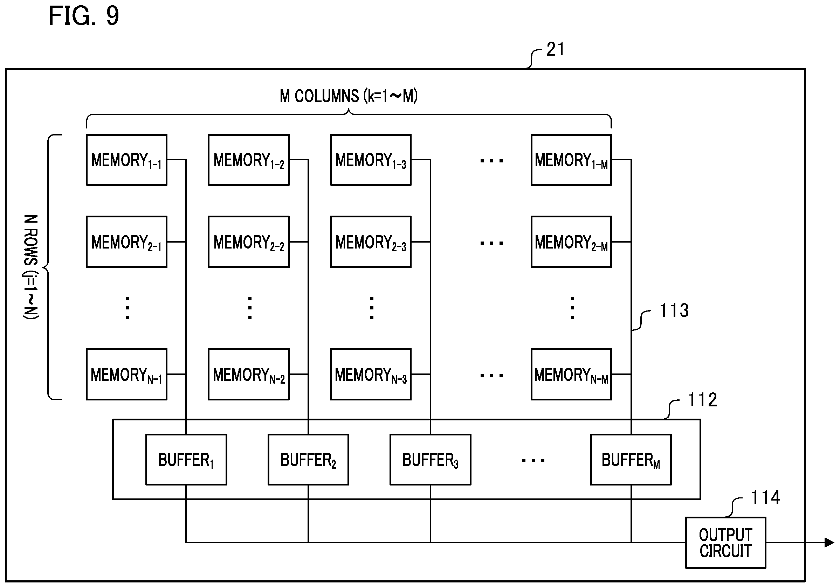

Fig. 9 is a diagram illustrating a relationship between the memory circuits and buffers in the embodiment. Fig. 9 illustrates a state in which the memory circuits 212 inside the signal processing circuit 103 in Fig. 3 are aligned in N rows and M columns, and the memory circuits are represented as a memory 1-1 to 1 memory N-M. Also, buffers 1 to M in Fig. 9 illustrate the buffers included in the reading circuit 112 in Fig. 3. The output circuit 114 in Fig. 9 corresponds to the output circuit 114 in Fig. 3.

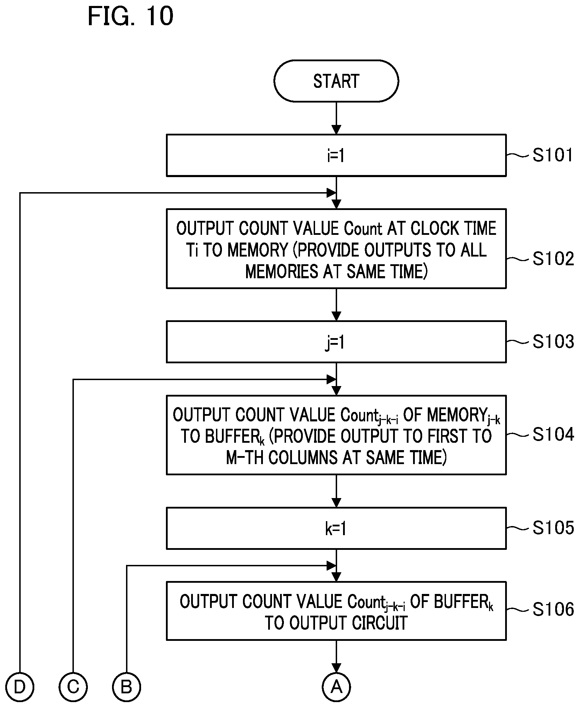

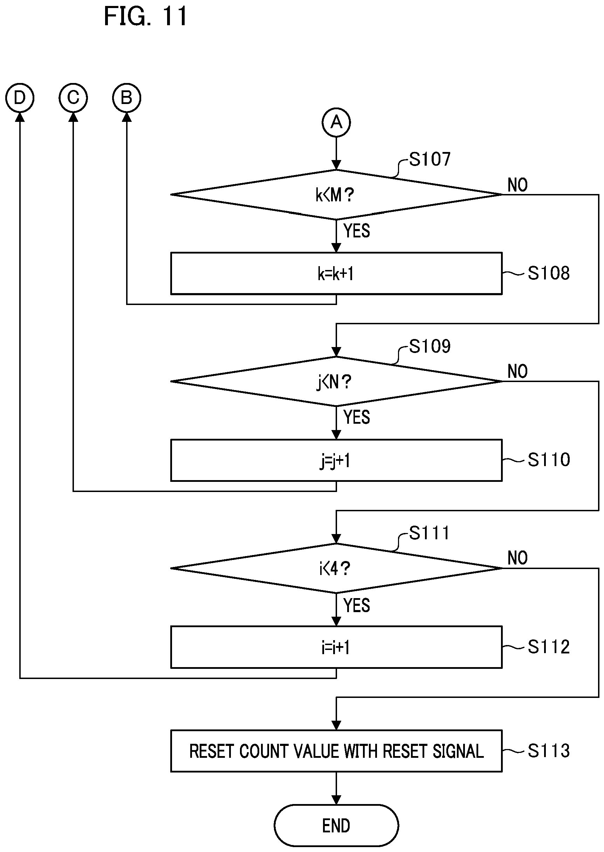

Fig. 10 is a flowchart illustrating details of a drive example of the photoelectric conversion element in the embodiment, and Fig. 11 is a flowchart continuing from Fig. 10. Note that an operation in each of the steps in the flowcharts in Figs. 10 and 11 is sequentially performed by a CPU as a computer inside the camera control unit 605 executing a computer program stored in a memory.

In Step S101 in Fig. 10, i = 1 is set. Next, in Step S102, a count value Count of the counter circuit 211 at the clock time Ti is output to the memory circuit 212. At this time, outputs are provided to all the memory circuits at the same time. The operation corresponds to the operation at the clock time T1 in Fig. 7.

Next, j = 1 is set in Step S103, and a count value Count(j-k-i) of the memory circuit j-k in Fig. 9 is output to the buffers in Step S104. At this time, the outputs are provided to the buffers in the first to M-th columns at the same time. This operation means an operation of taking the count values of the first row in Fig. 9 into the buffers.

Next, k = 1 is set in Step S105, and the count value Count(j-k-i) of the buffer k is output to the output circuit 114 in Step S106. This operation corresponds to an operation of reading the signal of the buffer in the leftmost column in Fig. 9 from the output circuit.

Next, processing proceeds to Step S107 in Fig. 11 via A, whether or not k < M is satisfied is determined in Step S107, k is incremented by 1 as k = k + 1 in Step S108 if the determination of Yes is made, the processing returns to Step S106 via B, and the operation in Step S106 is performed. This operation corresponds to an operation of reading the signal of the buffer in the second column from the left in Fig. 9 from the output circuit.

In a case in which determination of No is made in Step S107, that is, in a case in which k = M is established, this means that reading of the signal of the buffer in the M-th column in Fig. 9 from the output circuit has ended, the processing then proceeds to Step S109, and whether j < N is established is determined. In a case in which the determination of Yes is made in Step S109, j is incremented by 1 as j = j + 1 in Step S110, and the processing returns to Step S104 via C. This corresponds to an operation for starting reading of the next row.

In a case in which the determination of No is made in Step S109, this means that reading of all the rows has ended, the processing proceeds to Step S111, and whether or not j < 2 is established is determined. In a case in which the determination of Yes is made in Step S111, the processing proceeds to Step S112, i is incremented by 1 as i = i + 1, and the processing returns to Step S102 via D. This operation corresponds to an operation of starting the next reading at the clock time T2.

In a case in which determination of No is made in Step S111, this means that the reading at the clock time T2 has been completed, the processing thus proceeds to Step S113, and the counter circuit 211 is reset with a reset signal. This operation corresponds to a reset operation of the counter circuit 211 at the clock time T2 in Fig. 7. As described above, the signals accumulated in the photoelectric conversion element 100 can be sequentially read.

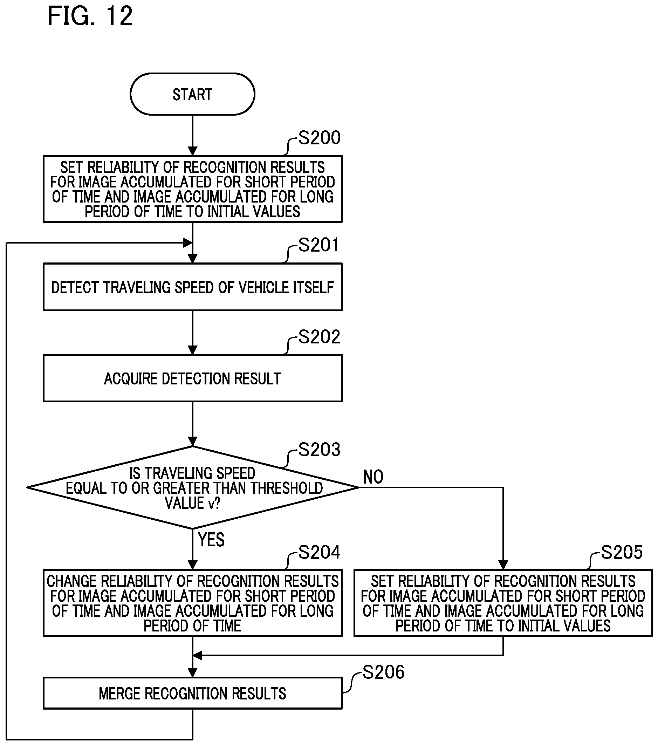

Fig. 12 is a flowchart illustrating an example of an imaging method of detecting conditions during operation and changing a reliability in the first embodiment, and illustrates an example in which a reliability of a recognition result for each of an image accumulated for a short period of time and an image accumulated for a long period of time is changed.

An operation in each of the steps in the flowchart in Fig. 12 is sequentially performed by the CPU as a computer inside the ECU 701 executing the computer program stored in the memory. Note that some of the steps in Fig. 12 may be performed by the CPU inside the camera control unit 605.

When the flow in Fig. 12 is performed, a power source of the movable apparatus 700 is in an activated state. In Step S200, the CPU of the ECU 701 sets a reliability of a recognition result for an image accumulated for a short period of time and a reliability of a recognition result for an image accumulated for a long period of time output by the recognition unit 604 to initial values.

In Step S201, the CPU of the ECU 701 detects the traveling speed of the movable apparatus 700 by the condition-during-operation detection unit 704 and moves on to the processing in Step S202.

In Step S202, the CPU of the ECU 701 acquires the traveling speed of the movable apparatus 700 acquired by the condition-during-operation detection unit 704 in Step S201 and moves on to Step S203.

In Step S203, the CPU of the ECU 701 determines whether or not the traveling speed of the movable apparatus 700 acquired by the condition-during-operation detection unit 704 in Step S202 is equal to or greater than the threshold value v (80 km per hour, for example). In a case in which the traveling speed of the movable apparatus 700 is equal to or greater than the threshold value v, the processing proceeds to Step S204. In a case in which the traveling speed of the movable apparatus 700 is less than the threshold value v, the processing proceeds to Step S205.

In Step S204, the CPU of the ECU 701 changes each of the reliability of the recognition result for the image accumulated for a short period of time and the reliability of the recognition result for the image accumulated for a long period of time acquired by the recognition unit 604.

In other words, the reliability x of the recognition result for the output image in the first accumulation period is increased from the initial value in Step S204. Alternatively, the reliability y of the recognition result for the output image in the second accumulation period is decreased from the initial value. Alternatively, both of them may be changed as described above. If the reliability of each recognition result is changed in Step S204, then the processing proceeds to Step S206.

In Step S205, the reliability of the recognition result for the image accumulated for a short period of time and the reliability of the recognition result for the image accumulated for a long period of time are set to be initial values similarly to Step S200. If the reliability of each recognition result is set in Step S205, then the processing proceeds to Step S206.

In Step S206, the CPU of the ECU 701 merges the recognition result for the output image in the first accumulation period (short time accumulation) weighted with the reliability x and the recognition result for the output image in the second accumulation period (short time accumulation) weighted with the reliability y. A final recognition result is thereby calculated. Note that the merging includes weighted addition, processing of selecting a higher reliability, and the like.

Then, the vehicle control unit 702 controls operations of the movable apparatus on the basis of the final recognition result calculated in Step S206. Also, a photographic subject frame, a reliability of the merged recognition results, an alert, and the like may be displayed on the display unit 703 on the basis of the final recognition result. The processing returns to Step S201 after the processing in Step S206, and the flow in Fig. 12 is cyclically repeated when the power of the movable apparatus is turned on.

Here, Steps S203 to 205 function as a recognition step of performing recognition processing on the basis of the generated signal. Also, the reliability of the recognition result based on the signal in the first accumulation period and the reliability of the recognition result based on the signal in the second accumulation period are determined on the basis of driving condition information related to driving conditions of the movable apparatus in the recognition step.

### <Second embodiment>

Fig. 13 is a functional block diagram of an imaging device 800 and a movable apparatus 700 according to a second embodiment. In the second embodiment, some of functional blocks of the imaging device 800 and the movable apparatus 700 configure an imaging system. The imaging device 800 includes a photoelectric conversion element 100, an image forming optical system 601, an image processing unit 603, a recognition unit 604, a camera control unit 605, a storage unit 606, a communication unit 607, an incident light amount detection unit 801, and the like.

The movable apparatus 700 includes an ECU 701, a vehicle control unit 702, a display unit 703, a condition-during-operation detection unit 704, and the like. Note that the same reference signs as those in Fig. 6 are the same functional blocks in Fig. 13, and description thereof will thus be omitted.

The incident light amount detection unit 801 detects the amount of light that is incident on the imaging device 800 and outputs light amount information to the ECU 701. The ECU 701 that has acquired the light amount information determines whether or not the light amount is equal to or greater than a certain threshold value z. Then, in a case in which the light amount exceeds the threshold value z, a reliability of each of recognition results for an image accumulated for a short period of time and an image accumulated for a long period of time is changed on the basis of condition information during operation from the condition-during-operation detection unit 704 similarly to the first embodiment.

In a case in which the light amount is determined not to be equal to or greater than the threshold value z, brightness of the image accumulated for a short period of time is not sufficient, and a reliability of each of the recognition results for the image accumulated for a short period of time and the image accumulated for a long period of time is thus not changed regardless of the conditions during operation.

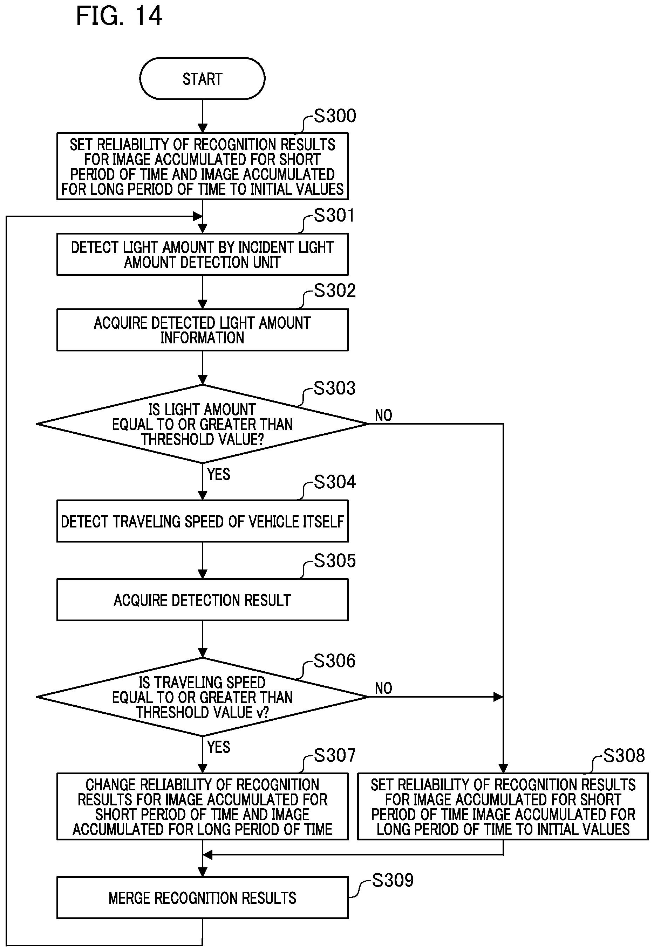

Fig. 14 is a flowchart illustrating an example of an imaging method of detecting the incident light amount and the conditions during operation and changing a reliability in the second embodiment and illustrates an example in which a reliability of a recognition result for each of an image accumulated for a short period of time and an image accumulated for a long period of time is changed.

An operation in each of steps in the flowchart in Fig. 14 is sequentially performed by a CPU as a computer within the ECU 701 executing a computer program stored in a memory.

When the flow in Fig. 14 is performed, a power source of the movable apparatus 700 is in an activated state. In Step S300, the CPU of the ECU 701 sets a reliability of each of the recognition result for the image accumulated for a short period of time and a reliability of the recognition result of the image accumulated for a long period of time output by the recognition unit 604 to an initial value.

In Step S301, the CPU of the ECU 701 detects the amount of light that is incident on the imaging device 800 by the incident light amount detection unit 801 and moves on to Step S302.

In Step S302, the CPU of the ECU 701 acquires the light amount information for the imaging device 800 acquired by the incident light amount detection unit 801 in Step S301 and moves on to Step S303.

In Step S303, the CPU of the ECU 701 determines whether or not information regarding the amount of light that has been incident on the imaging device 800 acquired by the incident light amount detection unit 801 in Step S302 is equal to or greater than a threshold value z. In a case in which the amount of light that has been incident on the imaging device 800 is equal to or greater than the threshold value, the processing proceeds to Step S304. In a case in which the amount of light that has been incident on the imaging device 800 is less than the threshold value z, the processing proceeds to Step S308.

In Step S304, the CPU of the ECU 701 detects the traveling speed of the movable apparatus 700 by the condition-during-operation detection unit 704 and moves on to Step S305.

In Step S305, the CPU of the ECU 701 acquires the traveling speed of the movable apparatus 700 acquired by the condition-during-operation detection unit 704 in Step S304 and moves on to Step S306.

In Step S306, the CPU of the ECU 701 determines whether or not the traveling speed of the movable apparatus 700 acquired by the condition-during-operation detection unit 704 in Step S305 is equal to or greater than the threshold value v (80 km per hour, for example). In a case in which the traveling speed of the movable apparatus 700 is equal to or greater than the threshold value v, the processing proceeds to Step S307. In a case in which the traveling speed of the movable apparatus 700 is less than the threshold value v, the processing proceeds to Step S308.

In Step S307, the CPU of the ECU 701 changes each of a reliability of a recognition result for an image accumulated for a short period of time and a reliability of a recognition result for an image accumulated for a long period of time acquired by the recognition unit 604.

In other words, the reliability x of the recognition result for the output image in the first accumulation period is increased from the initial value in Step S307. Alternatively, the reliability y of the recognition result for the output image in the second accumulation period is decreased from the initial value. Alternatively, both may be changed as described above. After the processing in Step S307, the processing proceeds to Step S309.

In Step S308, the CPU of the ECU 701 sets each of the reliability of the recognition result for the image accumulated for a short period of time and the reliability of the recognition result for the image accumulated for a long period of time acquired by the recognition unit 604 to the initial value similarly to Step S300. After the processing in Step S308, the processing proceeds to Step S309.

In Step S309, the CPU of the ECU 701 merges the recognition result for the output image in the first accumulation period (short time accumulation) weighted with the reliability x and the recognition result for the output image in the second accumulation period (long time accumulation) weighted with the reliability y. In this manner, a final recognition result is calculated. Note that the merging includes weighted addition, processing of selecting a higher reliability, and the like.

Then, the vehicle control unit 702 controls operations of the movable apparatus on the basis of the final recognition result calculated in Step S307. Also, a photographic subject frame, a reliability of the merged recognition results, an alert, and the like may be displayed on the display unit 703 on the basis of the final recognition result. The processing returns to Step S301 after the processing in Step S309, and the flow in Fig. 14 is cyclically repeated when the power source of the movable apparatus is turned on.

Here, Steps S306 to S308 function as a recognition step of performing recognition processing on the basis of the generated signal. Also, a reliability of a recognition result based on a signal in the first accumulation period and a reliability of a recognition result based on a signal in the second accumulation period are determined on the basis of driving condition information related to driving conditions of the movable apparatus in the recognition step.

Note that in the above embodiment, the condition-during-operation detection unit 704 detects the traveling speed of the movable apparatus 700 and the reliability of the recognition result is changed in a case in which the traveling speed is determined to be equal to or greater than a predetermined threshold value, for example. However, the condition-during-operation detection unit 704 may detect a steering angle of the movable apparatus 700 and the reliability of the recognition result may be changed in a case in which the steering angle is equal to or greater than a predetermined threshold value.

Alternatively, the condition-during-operation detection unit 704 may detect up-down or right-left shaking (vibration) of the movable apparatus 700, and the reliability of the recognition result may be changed in a case in which the shaking is equal to or greater than a certain threshold value. Alternatively, the condition-during operation detection unit 704 may detect the amount of rain or the amount of snowfall, and the reliability of the recognition result may be changed in a case in which the amount of rain or the amount of snowfall is equal to or greater than a predetermined threshold value.

Alternatively, the condition-during-operation detection unit 704 may detect acceleration of the movable apparatus, and the reliability of the recognition result may be changed in a case in which the acceleration is equal to or greater than a predetermined threshold value since sudden acceleration is considered.

Note that in a case in which each of the steering angle, the shaking, the amount of rain, the amount of snowfall, and the acceleration is equal to or greater than its threshold value, the reliability x of the recognition result for the output image in the first accumulation period is increased from the initial value. Alternatively, the reliability y of the recognition result for the output image in the second accumulation period is decreased from the initial value. Alternatively, both can be changed as described above.

This is because a change rate or a degradation degree (image quality degradation due to rain or snow) of the image is high in a case in which the steering angle, the vibration, the amount of rain, the amount of snowfall, or the acceleration is large, and the image in the short accumulation time is estimated to have a relatively higher reliability of the recognition processing.

In this manner, at least one of the reliability x of the recognition result for the output image in the first accumulation period and the reliability y of the recognition result for the output image in the second accumulation period is changed in accordance with the driving condition information of the movable apparatus in the present embodiment. Note that the driving condition information in the present embodiment includes at least one of the traveling speed of the movable apparatus, the acceleration of the movable apparatus, the steering angle of the movable apparatus, the vibration of the movable apparatus, the amount of rainfall or the amount of snowfall in the surroundings of the movable apparatus, and the like.

Note that although only one threshold value is provided for the driving condition information in the above embodiment, a plurality of threshold values may be provided, and the reliability may be gradually changed in a stepwise manner. Alternatively, the reliability may be continuously changed in accordance with a change in driving condition.

Also, although the flow of employing a reliability at the time of ordinary traveling in a case in which the amount of light is not sufficient has been described in the second embodiment, processing of decreasing the reliability of the image accumulated for a short period of time from the reliability at the time of the ordinary traveling or the initial value may be performed in a case in which the amount of light is extremely small.

Additionally, although the accumulation in the 1/4 full-frame period is performed in the shortest case, the length of the shortest accumulation period may be changed to a 1/5 full-frame period or a 1/3 full-frame period, for example, in accordance with recognition accuracy of the recognition unit 604. Alternatively, the length of the shortest accumulation period may be changed in accordance with brightness of a photographic subject.

Furthermore, the counter circuit may be reset in the middle of the accumulation period of the frame 1_1 in Fig. 7 in accordance with the brightness of the photographic subject, the image recognition accuracy, or the like even in a case in which the reading timing is set to the 1/4 full-frame period. In this manner, the substantial accumulation period may be set to be shorter than the 1/4 full-frame period.

Alternatively, the counter circuit may be reset once at the clock time T1 in Fig. 7. In this manner, the count value read at the clock time T2 may be adjusted.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the imaging system or the like through a network or various storage media. Then, a computer (or a CPU, an MPU, or the like) of the imaging system or the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2023-103781, filed on June 23, 2023, which is hereby incorporated by reference herein in its entirety.

## Claims

1. An imaging system comprising:
a plurality of pixels, each of which includes
a sensor unit that emits pulses in accordance with photons, and
a counter that counts the number of the pulses; and
at least one processor or circuit configured to function as
a control unit configured to
generate a signal on the basis of a difference between count values of the counter at the time of a start and an end of an accumulation period,
perform an accumulating operation in a first accumulation period and a second accumulation period within one full frame period, in which the first accumulation period is shorter than the second accumulation period, and output the signal generated in the first accumulation period between an end of the first accumulation period and an end of the second accumulation period, and
a recognition unit configured to perform recognition processing on the basis of the generated signal and determine a reliability of a recognition result based on the signal in the first accumulation period and a reliability of a recognition result based on the signal in the second accumulation period on the basis of driving condition information related to driving conditions of a movable apparatus.

2. The imaging system according to claim 1, wherein the first accumulation period and the second accumulation period overlap each other.

3. The imaging system according to claim 2, wherein the first accumulation period and the second accumulation period start at the same time.

4. The imaging system according to claim 1, wherein a timing when the second accumulation period ends coincides with a timing when a frame ends.

5. The imaging system according to claim 1, comprising:
a display unit that displays at least the signal generated in the second accumulation period as an image.

6. The imaging system according to claim 1, wherein the sensor unit includes an avalanche photodiode.

7. The imaging system according to claim 1, wherein the driving condition information includes at least one of a traveling speed of the movable apparatus, an acceleration of the movable apparatus, a steering angle of the movable apparatus, vibration of the movable apparatus, and the amount of rainfall or snowfall around the movable apparatus.

8. A movable apparatus comprising:
a plurality of pixels, each of which includes
a sensor unit that emits pulses in accordance with photons, and
a counter that counts the number of the pulses; and
at least one processor or circuit configured to function as:
a control unit configured to
generate a signal on the basis of a difference between count values of the counter at the time of a start and an end of an accumulation period,
perform an accumulating operation in a first accumulation period and a second accumulation period within one full frame period, in which the first accumulation period is shorter than the second accumulation period, and output the signal generated in the first accumulation period between an end of the first accumulation period and an end of the second accumulation period, and
a recognition unit configured to perform recognition processing on the basis of the generated signal and determine a reliability of a recognition result based on the signal in the first accumulation period and a reliability of a recognition result based on the signal in the second accumulation period on the basis of a driving condition information related to driving conditions of a movable apparatus, and
a movement control section that controls operations of the movable apparatus on the basis of at least a result of the recognition processing using the signal generated in the first accumulation period.

9. An imaging method performed by an imaging system that includes a plurality of pixels, each of which includes a sensor unit that emits pulses in accordance with photons and a counter that counts the number of the pulses, the method comprising:
performing control to generate a signal on the basis of a difference between count values of the counter at the time of a start and an end of a accumulation period, perform an accumulation operation in a first accumulation period and a second accumulation period within one full frame period, in which the first accumulation period is shorter than the second accumulation period, and output the signal generated in the first accumulation period between an end of the first accumulation period and an end of the second accumulation period; and
performing recognition processing on the basis of the generated signal and determining a reliability of a recognition result based on the signal in the first accumulation period and a reliability of a recognition result based on the signal in the second accumulation period on the basis of driving condition information related to driving conditions of a movable apparatus.

10. A non-transitory computer-readable storage medium configured to store a computer program to control an imaging system configured to have a plurality of pixels, each of which includes a sensor unit that emits pulses in accordance with photons and a counter that counts the number of the pulses,
wherein the computer program comprises instructions for executing following processes:
performing control to generate a signal on the basis of a difference between count values of the counter at the time of a start and an end of an accumulation period, perform an accumulation operation in a first accumulation period and a second accumulation period within one full frame period, in which the first accumulation period is shorter than the second accumulation period, and output the signal generated in the first accumulation period between an end of the first accumulation period and an end of the second accumulation period; and
performing recognition processing on the basis of the generated signal and determining a reliability of a recognition result based on the signal in the first accumulation period and a reliability of a recognition result based on the signal in the second accumulation period on the basis of driving condition information related to driving conditions of a movable apparatus.
